(19) Europäisches Patentamt
European Patent Office
Office européen des brevets

(11) EP 2 301 746 B1

(12) EUROPEAN PATENT SPECIFICATION

(45) Date of publication and mention of the grant of the patent:
**09.01.2013 Bulletin 2013/02**

(51) Int Cl.:
**B32B 7/02** (2006.01)   **B44C 1/00** (2006.01)

(21) Application number: **10170792.5**

(22) Date of filing: **26.07.2010**

(54) **Molded product assembly**

Formproduktanordnung

Ensemble formant un produit moulé

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **09.09.2009 KR 20090085010**

(43) Date of publication of application:
**30.03.2011 Bulletin 2011/13**

(73) Proprietor: **CHEIL INDUSTRIES INC.**
**Kumi-city,**
**Kyungsangbuk-do (KR)**

(72) Inventors:
• **Kim, Jae-Kyung**
**Uiwang-si, Gyeonggi-do (KR)**

• **Seo, Jeong-Mi**
**Uiwang-si, Gyeonggi-do (KR)**
• **Chung, Hyoung-Joo**
**Uiwang-si, Gyeonggi-do (KR)**

(74) Representative: **Bublak, Wolfgang et al**
**Bardehle Pagenberg Partnerschaft**
**Patentanwälte, Rechtsanwälte**
**Prinzregentenplatz 7**
**81675 München (DE)**

(56) References cited:
• **DATABASE WPI Week 200259 Thomson Scientific, London, GB; AN 2002-551843 XP002600900 -& JP 2002 113740 A (HONDA MOTOR CO LTD) 16 April 2002 (2002-04-16)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This disclosure relates to a molded product assembly having excellent metal texture.

Recently, plastic exterior products are increasingly being produced since electronic parts, auto parts, and the like having various colors and high quality texture are becoming popular.

However, this limitedly depends on a technology of accomplishing metal texture characteristics by mainly adding a material having a metal texture, for example a metal, aluminum flakes, sparkles, pearl, and the like to a plastic resin.

An exemplary embodiment provides a molded product assembly having a metal texture by combining color, gloss, transparency, a corrosion pattern, and the like of a plastic resin itself without adding a material having a metal texture to a plastic resin.

The molded product assembly of the invention is generically defined in independent claim 1.

The second molded product can have a corrosion pattern ranging from about 0.001 to about 100$\mu$m deep.

The first and second molded products can have colors in a complementary color relationship or an opposite color relationship each other.

The first molded product can be prepared from a first resin composition including a first resin having transparency ranging from about 80 to about 99.9% and a first dye and/or pigment, and the second molded product can be prepared from a second resin composition including a second resin having transparency ranging from about 0 to about 99.9% and a second dye and/or pigment.

The first and second resins independently include a synthetic resin or an environmentally-friendly resin selected from the group consisting of a rubber-modified vinyl-based graft copolymer resin, a polyamide resin, a polycarbonate resin, a polyalkyl(meth)acrylate resin, a polyester resin, a polyolefin resin, a polylactic acid (PLA) resin, a polyhydroxy alkanoate (PHA) resin, a polybutylene succinate (PBS) resin, a starch resin, a plant-derived polyamide resin, a biosuccinic acid resin, and a combination thereof.

The first and second dye and/or pigments can be independently selected from the group consisting of a dye selected from the group consisting of a solvent-type dye, a fluorescent whitening agent, a fluorescent dye, a mixed dye, and a combination thereof; an organic pigment selected from the group consisting of an anthraquinone-based pigment, a perylene-based pigment, a phthalocyanine pigment, an azo-based pigment, and a combination thereof; an inorganic pigment selected from the group consisting of carbon black, iron oxide black, a white pigment, a composite metal oxide, ultramarine blue, and a combination thereof; and a combination thereof. The first dye and/or pigment may be included in an amount ranging from about 0.01 to about 1 wt% based on the entire amount of the first resin composition, and the second dye and/or pigment may be included in an amount ranging from about 0.5 to about 50 wt% based on the entire amount of the second resin composition.

The molded product assembly may have gloss ranging from about 70 to about 99 at 60°.

Hereinafter, further aspects of the present invention will be described in detail.

FIG. 1 provides a photograph showing a molded product assembly prepared by assembling first and second molded products according to one embodiment.

FIG. 2A provides a photograph showing one corrosion pattern for a second molded product according to one embodiment.

FIG. 2B is a graph showing length and depth of the corrosion pattern in an A region in FIG. 2A.

FIG. 3A is a photograph showing another corrosion pattern of a second molded product according to one embodiment.

FIG. 3B is a graph showing length and depth of the corrosion pattern in a B region in FIG. 3A.

FIG. 4 shows example of a color ring.

FIG. 5A provides a photograph showing excellent metal texture of a molded product assembly of Example 3 (◎ excellent).

FIG. 5B provides a photograph showing medium metal texture of a molded product assembly of Example 2 (△ medium).

FIG. 5C provides a photograph showing bad metal texture of a molded product assembly of Comparative Example 1 (X bad).

Exemplary embodiments will hereinafter be described in detail. However, these embodiments are only exemplary, and the present invention is not limited thereto.

As used herein, when specific definition is not otherwise provided, the term "(meth)acrylate" refers to "acrylate" and "methacrylate". The term "(meth)acrylic acid alkyl ester" refers to "acrylic acid alkyl ester" and "methacrylic acid alkyl ester", and the term "(meth)acrylic acid ester" refers to "acrylic acid ester" and "methacrylic acid ester".

As used herein, when specific definition is not otherwise provided, a "color ring" indicates colors arranged according to the similar color group in a circle shape.

As used herein, when specific definition is not otherwise provided, a "dye and/or pigment" indicates one selected from the group consisting of a dye, a pigment, and a combination thereof.

According to one embodiment, provided is a technology for accomplishing a metal texture such as spray, a metal, a pearl, and the like through combination of various transparent and opaque colors of a plastic resin itself with common colors. In other words, provided is a molded product assembly having metal texture by combining color, gloss, transparency, corrosion pattern, and the like of a dye and/or pigment with a plastic resin itself instead of adding a material expressing a metal texture thereto.

Hereinafter, a molded product assembly according to one embodiment is illustrated in detail.

The molded product assembly can have metal texture by assembling first and second molded products having different transparency, gloss, and corrosion pattern.

The assembly includes overlapping or stacking the first and second molded products together.

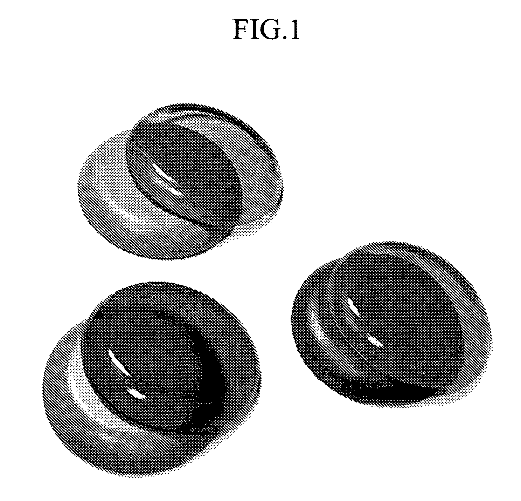

FIG. 1 provides a photograph showing a molded product assembly prepared by assembling the first and second molded products. Referring to FIG. 1, the first and second molded products that are respectively transparent and opaque materials are assembled, and thus can accomplish metal texture of their assembly.

In particular, the first molded product is a transparent material having transparency ranging from about 75 to about 99% and in particular, from about 75 to about 85%. The second molded product is an opaque material having transparency ranging from about 0.1 to about 50% and in particular, from about 0.1 to about 25%. The transparency is evaluated measuring how much light from D65 (CIE standard) light source passes through an about 2.5 mm thick molded product using a hazemeter. The lower transparency, that is to say, closer to about 0%, indicates opaque. When the first and second molded products respectively have transparency within the range and are assembled together, they can accomplish excellent metal texture such as spray, metal, pearl, and the like.

The first molded product of the transparent material has a gloss of about 70 or more at about 60°, and in particular, from about 80 to about 99.9. The second molded product of the opaque material has a gloss from about 0.1 to about 40 at about 60°, and in particular, from about 5 to about 20. The gloss is measured using a gloss meter at about 60°. When the first and second molded products respectively have gloss within the range and are assembled together, they can accomplish excellent high quality metal texture, that is to say, spray, metal, pearl, and the like.

The first molded product of the transparent material has no corrosion pattern on the surface, while the second molded product of the opaque material has a corrosion pattern thereon.

The corrosion pattern is obtained by corrosion mechanisms, which are carried out by applying a pattern on a metal surface of injection mold in which molding a plastic resin, and then eliminating the metal from the surface of infection mold through an erosion process.

The corrosion mechanisms include a chemical corrosion chemically dissolving a metal and an electrolytic corrosion electrochemically dissolving a metal. Corrosion patterning using a plastic mold in general depends on chemical corrosion, and has an advantage of forming various patterns by applying leather and wood grain patterns, natural material pattern, fiber and stipple patterns, and the like.

The corrosion pattern formed in the second molded product in the aforementioned corrosion method may be in a range of about 0.001 to about 100$\mu$m deep, and in particular, in a range of about 5 to about 50$\mu$m deep. When the second molded product has a corrosion pattern within the depth range and is assembled with a first molded product, it can have excellent high quality metal texture such as spray, metal, pearl, and the like.

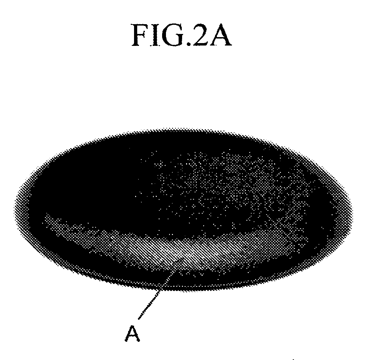

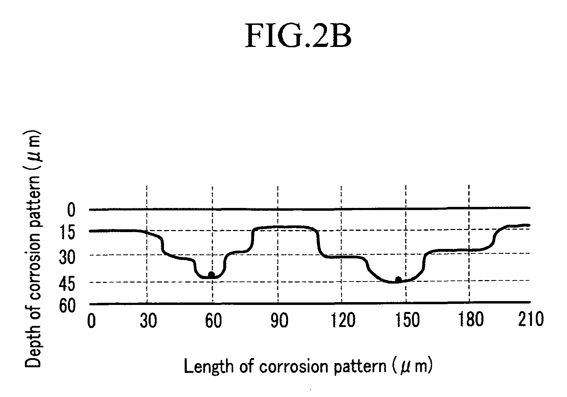

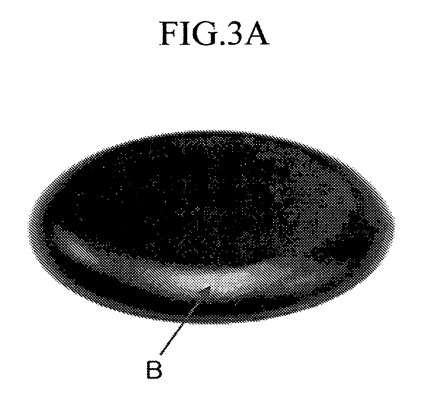

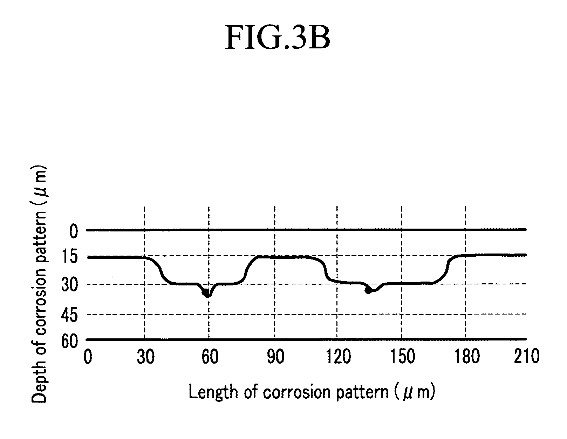

The corrosion pattern of the second molded product can be identified by a photograph provided in FIGS. 2A and 2B and FIGS. 3A and 3B. FIG. 2A provides a photograph showing a corrosion pattern of the second molded product according to one embodiment, and FIG. 2B is a graph showing length and depth of the corrosion pattern in an A region in FIG. 2A. FIG. 3A provides a photograph showing another corrosion pattern of the second molded product according to one embodiment. FIG. 3B is a graph showing length and depth of the corrosion pattern in a B region in FIG. 3A. Referring to FIGS. 2A to 3B, a horizontal axis in the graph of FIGS. 2B and 3B indicates length of a corrosion pattern, while a vertical axis indicates depth of the corrosion pattern. The second molded product shown in FIG. 2A has larger length and depth of a corrosion pattern than the one shown in FIG. 3A. Herein, the length of a corrosion pattern shown in FIGS. 2B and 3B is exemplary and is not limited thereto.

The deeper corrosion pattern the second molded product has, the less gloss it has. The gloss can be regulated by corrosion patterns.

The first and second molded products may respectively have various colors. Accordingly, an assembly of the first and second molded products can have various color combinations.

The colors are displayed in complementary color, opposite color, and similar color relationships.

The complementary color relationship indicates a color combination changing into a color near gray or black when mixed in a particular ratio. In other words, colors in the complementary color relationship are positioned farthest from each other in a color ring.

When a color is combined with its complementary color, it has higher saturation, looks clear, and brightens the other color. This is because the color has the same afterimage as the complementary color.

In addition, the opposite color relationship indicates colors positioned far away from each other but closer than the complementary color relationship in a color ring. Further, the similar color relationship indicates colors positioned close to each other but closer than the opposite color relationship.

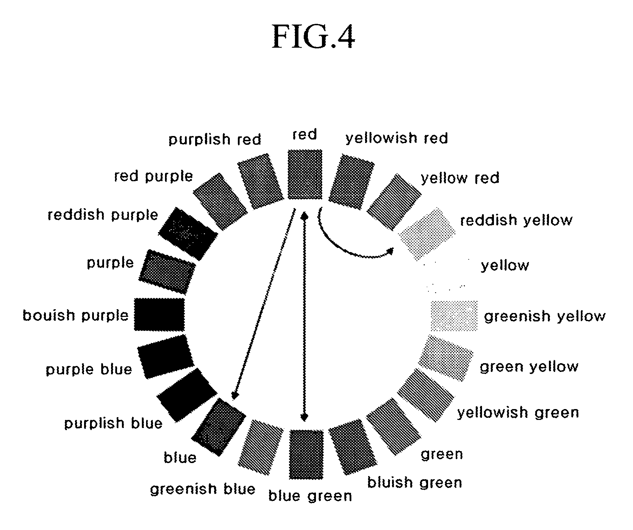

FIG. 4 is a picture showing an example of a color ring. Referring to FIG. 4, examples of the complementary color relationship are red and blue green, yellow and purple blue, and the like, examples of the opposite color relationship are red and blue, yellow and purple, and the like, and examples of the similar color relationship are red and reddish yellow, yellow and yellow green, and the like.

In particular, the first and second molded products may have colors in a complementary color relationship or an opposite color relationship each other. The color combination in a complementary or opposite relationship can maximize metal texture effects.

The colors realized in an assembly of a molded product can be acquired by variously combining dye and/or pigments respectively used for the first and second molded products.

The first and second molded products can be respectively prepared from first and second resin compositions. The first resin composition includes a first resin having transparency ranging from about 80 to about 99.9% and a first dye and/or pigment. The second resin composition includes a second resin having transparency ranging from about 0 to about 99.9% and a second dye and/or pigment.

The second molded product prepared from the second resin composition includes an opaque material. The opaque material is used in a way of controlling depth of a corrosion pattern and the amount of a dye and/or pigment, even though it includes a transparent resin. Since the second resin has transparency ranging from about 0 to about 99.9%, it can be transparent or opaque.

The first and second resins independently include a synthetic resin or an environmentally friendly resin selected from the group consisting of a rubber modified vinyl-based graft copolymer resin, a polyamide resin, a polycarbonate resin, a polyalkyl(meth)acrylate resin, a polyester resin, a polyolefin resin, a polylactic acid (PLA) resin, a polyhydroxy alkanoate (PHA) resin, a polybutylene succinate (PBS) resin, a starch resin, a plant-derived polyamide resin, a biosuccinic acid resin, and a combination thereof.

The rubber modified vinyl-based graft copolymer resin includes one produced by graft copolymerizing styrene, acrylonitrile, and selectively a methyl(meth)acrylate polymer into a butadiene rubber, an acrylic rubber, or a styrene/butadiene rubber, or one produced by graft copolymerizing methyl(meth)acrylate into a butadiene rubber, an acrylic rubber, or a styrene/butadiene rubber.

The polyamide resin may be polymerized using an amino acid, lactam, or diamine, and a dicarboxylic acid including an amide group at the main polymer chain.

The polycarbonate resin can be prepared by reacting a compound selected from the group consisting of diphenols and phosgenes, halogen acid esters, carbonate esters, and a combination thereof.

The polyan alkyl(meth)acrylate resin may be prepared by polymerizing a raw monomer including an alkyl(meth)acrylate. The alkyl(meth)acrylate includes a C1 to C10 alkyl group, for example, methyl(meth)acrylate, ethyl(meth)acrylate, butyl(meth)acrylate, glycidyl(meth)acrylate, hydroxyethyl(meth)acrylate, and the like.

The polyester resin may include a polyethylene terephthalate resin, a polytrimethylene terephthalate resin, a polybutylene terephthalate resin, a polyhexamethylene terephthalate resin, a polycyclohexane dimethylene terephthalate resin, or a polyester resin prepared by partly mixing another monomer with these resins and modifying the mixture to be non-crystalline.

The polyolefin resin may be selected from the group consisting of a high density polyethylene (HDPE) resin, a linear low density polyethylene (LLDPE) resin, a polypropylene resin, an ethylene-propylene copolymer resin, an ethylenevinyl alcohol copolymer resin, and a combination thereof.

The polylactic acid (PLA) resin may include a repeating unit induced from lactic acid selected from the group consisting of L-lactic acid, D-lactic acid, L,D-lactic acid, and a combination thereof as a polyester-based resin prepared through an ester reaction using lactic acid acquired by decomposing corn starch as a monomer.

The polyhydroxy alkanoate (PHA) resin is a biodegradable resin, and may include a blended mixture of a single polymer of a hydroxy alkanoic acid monomer. a copolymer of two or more different hydroxy alkanoic acid monomers. or a blended mixture of the single polymer and the copolymer. The hydroxy alkanoic acid monomer may include 3-hydroxy butyric acid, 3-hydroxy valeric acid, 3-hydroxy hexanoic acid, 3-hydroxy octanoic acid, 3-hydroxy octadecanoic acid, and the like. In addition, it may include a copolymer including two or more different hydroxy alkanoic acid monomers, for example, poly(3-hydroxy butyric acid-co-3-hydroxy hexanoic acid) or poly(3-hydroxy butyric acid-co-3-hydroxy valeric acid).

The polybutylene succinate (PBS) resin may be prepared through a polycondensation reaction of succinic acid prepared by fermenting a sugary substance such as corn, sugar cane, and the like, and 1,4-butanediol.

The starch resin may include a pure starch such as corn starch, rice starch, potato starch, tapioca starch, wheat starch, sweet potato starch, and the like, a modified starch such as an α-starch prepared by physically/chemically treating the pure starch, an acid-treated starch, an oxidized starch, an amphoteric starch, an ester starch, an ether starch, and the like, and a mixture thereof.

The plant-derived polyamide resin may be selected from the group consisting of polyamide 4, polyamide 6, polyamide 66, polyamide 610, polyamide 1010, polyamide 11, and a combination thereof. The polyamides 4 and 6 can be acquired from a sugaring process of a biomass such as cellulose or starch, the polyamide 66 can be acquired from a fermenting process using E-coli bacteria, and the polyamides 610, 1010, and 11 can be prepared from castor oil or vegetable oil.

The bio succinic acid resin includes a bio succinic acid and a derivative thereof, and can be prepared by fermenting a starch using an enzyme.

The first and second dye and/or pigments may be independently selected from the group consisting of a dye, a pigment, and a combination thereof.

The dye may be selected from the group consisting of an anthraquinone-based and a quinoline-based solvent-type dye, a fluorescent whitening agent, a fluorescent dye, a mixed dye, and a combination thereof, but is not limited thereto.

The pigment may have various colors such as red, green, blue, yellow, violet, and the like, and in particular, may be selected from the group consisting of an organic pigment such as an anthraquinone-based pigment, a perylene-based pigment, a phthalocyanine pigment, an azo-based pigment, and the like, an inorganic pigment such as carbon black, iron oxide black, white pigment (for example, $TiO_2$, ZnS, $BaSO_4$, $CaCO_3$, and the like), a composite metal oxide, ultramarine blue, and the like, and a combination thereof.

The first dye and/or pigment may be included in an amount of about 0.01 to about 1 wt% based on the entire amount of the first resin composition, and the second dye and/or pigment may be included in an amount ranging from about 0.5 to about 50 wt% based on the entire amount of the second resin composition. When the first and second dye and/or pigments are respectively included within the range, they can maintain transparency and opaqueness of each molded product.

Each first and second resin composition may include an additive selected from the group of an antibacterial agent, a heat stabilizer, a release agent, a light stabilizer, an inorganic material additive, a surfactant, a coupling agent, a plasticizer, an admixture, a stabilizer, a lubricant, an antistatic agent, a tint, a flame proofing agent, a weather-resistance agent, a colorant, an ultraviolet (UV) absorber, an ultraviolet (UV) blocking agent, a filler, a nucleating agent, an adhesion aid, an adhesive, and a mixture thereof.

The release agent may include a fluorine-containing polymer, silicone oil, metal salt of stearic acid, a metal salt of montanic acid, a montanic acid ester wax, or a polyethylene wax. In addition, the weather-resistance agent may include a benzophenone-type or amine-type weather-resistance agent. Furthermore, the ultraviolet (UV) blocking agent may include titanium oxide ($TiO_2$) or carbon black, and the filler may include glass fiber, carbon fiber, silica, mica, alumina, clay, calcium carbonate, calcium sulfate, or glass beads. When these fillers are added, they can improve properties such as mechanical strength, heat resistance, and the like. In addition, the nucleating agent may include talc or clay.

The additive can be used within an appropriate range, unless it deteriorates properties of the first and second resin compositions.

The first and second resin compositions can be prepared in a well-known method. For example, the aforementioned components are mixed with an additive. Then, the mixture is melt-extruded in an extruder and prepared as pellets.

When the first and second molded products prepared as aforementioned are assembled into a molded product assembly, the assembly can have a metal texture. The metal texture is evaluated with the naked eye and can have gloss to some degree.

In other words, the molded product assembly has gloss ranging from about 70 to about 90 at about 60°, and in particular, from about 80 to about 90. When a molded product assembly has gloss within the range, it can have very high quality, that is to say, it can have a texture such as a spray, metal, pearl, and the like.

As aforementioned, a molded product assembly prepared by assembling two molded products can have excellent metal texture due to combination of color, gloss, transparency, corrosion pattern, and the like by adding a dye and/or pigment to a plastic resin without adding a material expressing metal texture thereto, and accordingly can be usefully applied to a plastic exterior product requiring high quality metal texture such as electronic parts, auto parts, and the like.

The following examples illustrate the present invention in more detail. However, they are exemplary embodiments and are not limiting.

**Example**

According to one embodiment, each component used for preparing a molded product assembly prepared by assembling first and second molded products is as follows.

(A) First resin composition for preparing a first molded product

(A-1) First resin

a polycarbonate resin (SC-1220, Cheil Industries Inc.) having transparency of 85% as the first resin according to Examples 1 to 4 and Comparative Examples 1 to 4 was used.
In addition, a polycarbonate resin (SC-1220, Cheil Industries Inc.) having about transparency of 95% as a first resin according to Examples 5 and 6 was used.

(A-2) First dye and/or pigment

A mixture of MACROLEX YELLOW G made by LANXESS Energizing Chemistry Co., which is a solvent-type dye, and SUMIPLAST YELLOW FL7G made by SUMIPLAST Ind. Ltd., which is a solvent-type dye, was used as a first dye and/or pigment according to Examples 1 to 6.
In addition, a mixture of $TiO_2$ KRONOS 2232 made by KRONOS Inc., which is an inorganic pigment, MACROLEX YELLOW G made by LANXESS Energizing Chemistry Co., which is a solvent-type dye, and SUMIPLAST YELLOW FL7G made by SUMIPLAST Ind. Ltd., which is a solvent-type dye was used as a first dye and/or pigment according to Comparative Examples 1 to 4.

(B) Second resin composition for preparing a second molded product

(B-1) Second resin

A polycarbonate resin having transparency of about 85% (SC-1220, Cheil Industries inc.) was used as a second resin according to Examples 1 to 6 and Comparative Examples 1 to 4.

(B-2) Second dye and/or pigment

A mixture of $TiO_2$ KRONOS 2232 made by KRONOS Inc., which is an inorganic pigment, CERES BLUE 3R made by LANXESS Energizing Chemistry Co., which is a solvent-type dye, and HI BLACK 50L (carbon black) made by KCB, which is an inorganic pigment was used as a second dye and/or pigment according to Examples 1 and 2 and Comparative Examples 2 and 4.
A mixture of $TiO_2$ KRONOS 2232 made by KRONOS Inc., which is an inorganic pigment, dyeCERES BLUE 3R made by LANXESS Energizing Chemistry Co., which is a solvent-type dye, PVPAST BLUE A4R made by CLARIANT Co., and HI BLACK 50L (carbon black) made by KCB was used as a second dye and/or pigment according to Examples 3 to 6 and Comparative Examples 1 and 3.

**Examples 1 to 6 and Comparative Examples 1 to 4**

The aforementioned components were extruded in an amount provided in the following Table 1 at a feed rate of about 60kg/hr, a screw speed of about 250rpm, a temperature of about 250°C, and under screw configuration of about 45φ regular and L/D=29 in a common twin-screw extruder. Then, each extruded product was prepared into pellets.
The pallets according to Examples 1 to 6 and Comparative Examples 1 to 4 were dried at about 100°C for more than 3 hours, and then injection-molded at a shaping temperature ranging from about 250 to about 270°C at a molding temperature ranging from about 60 to about 80°C using a 10 oz injection molding machine, respectively preparing property specimens, that is to say, first and second molded products. Herein, the second molded product was prepared using a mold having a corrosion pattern for injecting each specimen. The first molded product appeared yellow, while the second molded product appeared blue.
The prepared property specimens were respectively measured regarding properties in the following method. The results are provided in the following Table 1.

(1) Transparency: evaluated by measuring how much light from a D65
(CIE standard) light source passed through a 2.5 mm-thick molded product by using a hazemeter (NDH-2000, NIPPON DENSHOKU Industries). The measurement values were calculated by using the following Equation 1.

[Equation 1]

$$\text{Transparency (HZ)} = \text{diffusion transmittance (DF)} / \text{entire transmittance (TT)} \times 100$$

$$\text{Total transmittance (TT)} = \text{diffusion transmittance (DF)} + \text{parallel transmittance (PT)}$$

(2) Gloss: measured at about 60° by using a gloss meter (CAT.NO 4520, BYK-GARDNER Inc.

(3) Corrosion pattern depth: measured by using a surface roughness-measuring device (SJ-301, Mitutoyo Co.).

Each molded product assembly was prepared by respectively assembling the first and second molded products according to Examples 1 to 6 and Comparative Examples 1 to 4. The molded product assemblies were measured regarding gloss in the same method as aforementioned. The results are provided in the following Table 1.

In addition, each molded product assembly was examined with the naked eye regarding metal texture. The results are provided in different ranks such as ◎ (excellent), △ (medium), and X (bad) in FIGS. 4A to 4C.

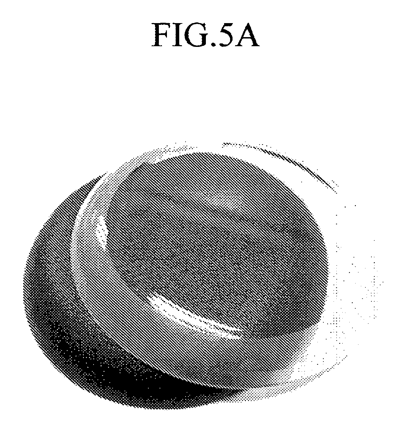

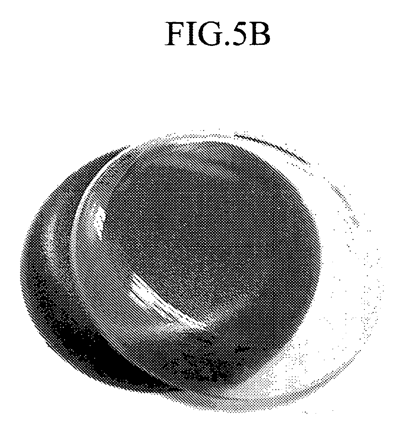

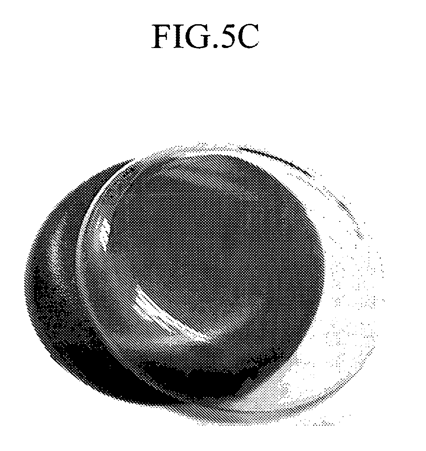

FIG. 5A is a photograph showing excellent metal texture (◎) of the molded product assembly of Example 3. FIG. 5B is a photograph showing medium metal texture (△) of the molded product assembly of Example 2. FIG. 5C is a photograph showing bad metal texture (X) of the molded product assembly of Comparative Example 1. Referring to FIGS. 5A to 5C, each molded product assembly was identified according to metal texture ranks.

Table 1

| | | Example | | | | | | Comparative Example | | | |
|---|---|---|---|---|---|---|---|---|---|---|---|
| | | 1 | 2 | 3 | 4 | 5 | 6 | 1 | 2 | 3 | 4 |
| First resin composition | First resin (wt%) | 99 | 99 | 99.9 | 99.9 | 99.99 | 99.99 | 98.5 | 98.5 | 98 | 98 |
| | First dye and/or pigment (wt%) | 1 | 1 | 0.1 | 0.1 | 0.01 | 0.01 | 1.5 | 1.5 | 2 | 2 |
| First molded product | Transparency (%) | 75 | 75 | 85 | 85 | 95 | 95 | 60 | 60 | 50 | 50 |
| | Gloss | 80 | 80 | 90 | 90 | 96 | 96 | 65 | 65 | 60 | 60 |
| Second resin composition | Second resin (wt%) | 98.7 | 98.7 | 96.7 | 96.7 | 95.7 | 95.7 | 95.7 | 98.4 | 95.7 | 98.7 |
| | Second dye and/or pigment (wt%) | 1.3 | 1.3 | 3.3 | 3.3 | 4.3 | 4.3 | 4.3 | 1.6 | 4.3 | 1.3 |
| | Corrosion pattern depth ($\mu$m) | 15 | 45 | 15 | 45 | 15 | 45 | 15 | 15 | 45 | 45 |
| Second molded product | Transparency (%) | 25 | 25 | 5 | 5 | 0.1 | 0.1 | 0.1 | 25 | 0.1 | 25 |
| | Gloss | 16 | 7 | 17 | 6 | 16 | 7 | 16 | 7 | 7 | 6 |
| A molded product assembly | Gloss | 80 | 80 | 90 | 90 | 96 | 96 | 65 | 65 | 60 | 60 |
| | Naked eye | △ | △ | ◎ | ◎ | ◎ | ◎ | X | X | X | X |

Tables 1 and 2 show that the molded product assemblies assembled including the first molded product having transparency ranging from about 75 to about 99.9% and the second molded product having transparency ranging from about 0.1 to about 50% according to Examples 1 to 6 had excellent metal texture having gloss ranging from about 70 to about 99 at about 60° as well as observation with the naked eye.

On the contrary, the molded product assemblies assembled using the first molded product having transparency beyond the range of about 75 to about 99.9% according to Comparative Examples 1 to 4 had bad metal texture having gloss beyond the range of about 70 to about 90 at about 60° as well as observation with the naked eye. The first molded product was prepared including a transparent resin, but included the first dye and/or pigment beyond about 1 wt% and thus had transparency of less than about 75%.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims. Therefore, the aforementioned embodiments should be understood to be exemplary but not limiting the present invention in any way.

**Claims**

1. A molded product assembly comprising a first molded product having transparency ranging from about 75 to about 99.9% and a second molded product having transparency ranging from about 0.1 to about 50%, and thus having a metal texture;
   wherein the first molded product has gloss of about 70 or more at about 60°, and the second molded product has gloss ranging from about 0.1 to about 40 at about 60°.

2. The molded product assembly of claim 1, wherein the second molded product has a corrosion pattern.

3. The molded product assembly of claim 2, wherein the corrosion pattern of the second molded product is in a range of about 0.001 to about 100 $\mu$m deep.

4. The molded product assembly of any of claims 1 to 3, wherein the first and second molded products have colors in a complementary color relationship or an opposite color relationship each other.

5. The molded product assembly of any of claims 1 to 4, wherein the first molded product is prepared using a first resin composition comprising a first resin having transparency ranging from about 80 to about 99.9% and a first dye and/or pigment, and the second molded product is prepared using a second resin composition comprising a second resin having transparency ranging from about 0 to about 99.9% and a second dye and/or pigment.

6. The molded product assembly of claim 5, wherein the first and second resins independently comprise a synthetic resin or an environmentally-friendly resin, selected from the group consisting of a rubber modified vinyl-based graft copolymer resin, a polyamide resin, a polycarbonate resin, a polyalkyl(meth)acrylate resin, a polyester resin, a polyolefin resin, a polylactic acid (PLA) resin, a polyhydroxy alkanoate (PHA) resin, a polybutylene succinate (PBS) resin, a starch resin, a plant-derived polyamide resin, a biosuccinic acid resin, and a combination thereof.

7. The molded product assembly of claim 5, wherein the first and second dye and/or pigments are independently selected from the group consisting of: a dye selected from the group consisting of a solvent-type dye, a fluorescent whitening agent, a fluorescent dye, a mixed dye, and a combination thereof; an organic pigment selected from the group consisting of an anthraquinone-based pigment, a perylene-based pigment, a phthalocyanine pigment, an azo-based pigment, and a combination thereof; an inorganic pigment selected from the group consisting of carbon black, iron oxide black, a white pigment, a composite metal oxide, ultramarine blue, and a combination thereof; and a combination thereof.

8. The molded product assembly of claim 5, wherein the first dye and/or pigment is comprised in an amount ranging from about 0.01 to about 1 wt% based on the entire amount of the first resin composition, and the second dye and/or pigment is comprised in an amount ranging from about 0.5 to about 50 wt% based on the entire amount of the second resin composition.

9. The molded product assembly of any of claims 1 to 8, wherein the molded product assembly has gloss ranging from about 70 to about 99 at about 60°.

**Patentansprüche**

1. Formproduktanordnung, umfassend ein erstes Formprodukt mit einer Transparenz im Bereich von etwa 75 bis etwa 99,9% und ein zweites Formprodukt mit einer Transparenz im Bereich von etwa 0,1 bis etwa 50%, und folglich einer Metallstruktur;
   wobei das erste Formprodukt einen Glanz von etwa 70 oder mehr bei etwa 60° aufweist und das zweite Formprodukt einen Glanz im Bereich von etwa 0,1 bis etwa 40 bei etwa 60° aufweist.

2. Formproduktanordnung nach Anspruch 1, wobei das zweite Formprodukt ein Korrosionsmuster aufweist.

3. Formproduktanordnung nach Anspruch 2, wobei das Korrosionsmuster des zweiten Formprodukts in einer Tiefe im Bereich von etwa 0,001 bis etwa 100 $\mu$m liegt.

4. Formproduktanordnung nach einem der Ansprüche 1 bis 3, wobei das erste und das zweite Formprodukt Farben aufweist, die zueinander in einer Komplementärfarbenbeziehung oder einer Beziehung von entgegengesetzten Farben liegen.

5. Formproduktanordnung nach einem der Ansprüche 1 bis 4, wobei das erste Formprodukt unter Verwendung einer ersten Harzzusammensetzung hergestellt wird, die ein erstes Harz mit einer Transparenz im Bereich von etwa 80 bis etwa 99,9% und einen ersten Farbstoff und/oder ein erstes Pigment umfasst, und das zweite Formprodukt unter Verwendung einer zweiten Harzzusammensetzung hergestellt wird, die ein zweites Harz mit einer Transparenz im Bereich von etwa 0 bis etwa 99,9% und einen zweiten Farbstoff und/oder ein zweites Pigment umfasst.

6. Formproduktanordnung nach Anspruch 5, wobei das erste und das zweite Harz unabhängig ein synthetisches harz oder ein umweltfreundliches Harz umfassen, das ausgewählt ist aus der Gruppe, bestehend aus einem kautschukmodifizierten Pfopfcopolymerharz auf Vinylbasis, einem Polyamidharz, einem Polycarbonatharz, einem Polyalkyl(meth)acrylatharz, einem Polyesterharz, einem Polyolefinharz, einem Harz aus Polymilchsäure (polylactic acid; PLA), einem Polyhydroxyalkanoat(PHA)-Harz, einem Polybutylensuccinat(PBS)-Harz, einem Stärkeharz, einem von Pflanzen abgeleitetes Polyamidharz, einem Biobemsteinsäureharz und einer Kombination davon.

7. Formproduktanordnung nach Anspruch 5, wobei der erste und der zweite Farbstoff und/oder das erste oder zweite Pigment unabhängig ausgewählt sind aus der Gruppe, bestehend aus: einem Farbstoff, der ausgewählt ist aus der Gruppe, bestehend aus einem Farbstoff vom Lösungsmitteltyp, einem fluoreszierenden Bleichmittel, einem fluoreszierenden Farbstoff, einem Mischfarbstoff und einer Kombination davon; einem organischen Pigment, das ausgewählt ist aus der Gruppe, bestehend aus einem Pigment auf Anthrachinonbasis, einem Pigment auf Perylenbasis, einem Phthalocyaninpigment, einem Pigment auf Azobasis und einer Kombination davon; einem anorganischen Pigment, das ausgewählt ist aus der gruppe, bestehend aus Ruß, Eisenoxidschwarz, einem weißen Pigment, einem Verbundmetalloxid, Ultramarinblau und einer Kombination davon; und einer Kombination davon.

8. Formproduktanordnung nach Anspruch 5, wobei der erste Farbstoff und/oder das erste Pigment in einer Menge im Bereich von etwa 0,01 bis etwa 1 Gew.-% auf der Basis der Gesamtmenge der ersten Harzzusammensetzung enthalten ist, und der zweite Farbstoff und/oder das zweite Pigment in einer Menge im Bereich von etwa 0,5 bis etwa 50 Gew.-% auf der Basis der Gesamtmenge der zweiten Harzzusammensetzung enthalten ist.

9. Formproduktanordnung nach einem der Ansprüche 1 bis 8, wobei die Formproduktanordnung einen Glanz im Bereich von etwa 70 bis etwa 99 bei etwa 60° aufweist.

**Revendications**

1. Assemblage de produits moulés, comprenant un premier produit moulé ayant une transparence comprise dans la plage d'environ 75 à environ 99,9 % et un deuxième produit moulé ayant une transparence comprise dans la plage d'environ 0,1 à environ 50 %, et ayant ainsi une texture métallique ;
   dans lequel le premier produit moulé a un brillant d'environ 70 ou plus à environ 60°, et le deuxième produit moulé a un brillant compris dans la plage d'environ 0,1 à environ 40 à environ 60°.

2. Assemblage de produits moulés selon la revendication 1, dans lequel le deuxième produit moulé présente un modèle de corrosion.

3.  Assemblage de produits moulés selon la revendication 2, dans lequel le modèle de corrosion du deuxième produit moulé correspond à une profondeur comprise dans la plage d'environ 0,001 à environ 100 μm.

4.  Assemblage de produits moulés selon l'une quelconque des revendications 1 à 3, dans lequel le premier et le deuxième produits moulés ont des couleurs présentant un arrangement de couleurs complémentaires, ou un arrangement de couleurs opposées l'une à l'autre.

5.  Assemblage de produits moulés selon l'une quelconque des revendications 1 à 4, dans lequel le premier produit moulé est préparé par utilisation d'une première composition de résine comprenant une première résine ayant une transparence comprise dans la plage d'environ 80 à environ 99,9 % et un premier colorant et/ou pigment, et le deuxième produit moulé est préparé par utilisation d'une deuxième composition de résine comprenant une deuxième résine ayant une transparence comprise dans la plage d'environ 0 à environ 99,9 % et un deuxième colorant et/ou pigment.

6.  Assemblage de produits moulés selon la revendication 5, dans lequel la première et la deuxième résines comprennent, d'une manière indépendante, une résine synthétique ou une résine respectueuse de l'environnement, choisie dans le groupe consistant en une résine d'un copolymère greffé à base vinylique modifié par un caoutchouc, une résine de polyamide, une résine de polycarbonate, une résine de poly((méth)acrylate d'alkyle), une résine de polyester, une résine de polyoléfine, une résine de poly(acide lactique) (PLA), une résine de polyhydroxyalcanoate (PHA), une résine de poly(succinate de butylène) (PBS), une résine d'amidon, une résine de polyamide d'origine végétale, une résine d'acide biosuccinique et une combinaison de celles-ci.

7.  Assemblage de produits moulés selon la revendication 5, dans lequel le premier et le deuxième colorants et/ou pigments sont choisis d'une manière indépendante dans le groupe consistant en un colorant choisi dans le groupe consistant en un colorant de type solvant, un azurant fluorescent, un colorant fluorescent, un colorant mixte et une combinaison de ceux-ci ; un pigment organique choisi dans le groupe consistant en un pigment anthraquinonique, un pigment de pérylène, un pigment de phtalocyanine, un pigment à base azoïque et une combinaison de ceux-ci ; un pigment inorganique choisi dans le groupe consistant en le noir de carbone, le noir d'oxyde de fer, un pigment blanc, un oxyde métallique composite, du bleu d'outremer et une combinaison de ceux-ci ; et une combinaison de ceux-ci.

8.  Assemblage de produits moulés selon la revendication 5, dans lequel le premier colorant et/ou pigment est présent en une quantité comprise dans la plage d'environ 0,01 à environ 1 % en poids par rapport à la quantité totale de la première composition de résine, et le deuxième colorant et/ou pigment est présent en une quantité comprise dans la plage d'environ 0,5 à environ 50 % en poids par rapport à la quantité totale de la deuxième composition de résine.

9.  Assemblage de produits moulés selon l'une quelconque des revendications 1 à 8, l'assemblage de produits moulés ayant un brillant compris dans la plage d'environ 70 à environ 99 à environ 60°.

FIG.1

# FIG.2A

A

# FIG.2B

# FIG.3A

B

# FIG.3B

# FIG.4

purplish red    red    yellowish red

red purple    yellow red

reddish purple    reddish yellow

purple    yellow

bouish purple    greenish yellow

purple blue    green yellow

purplish blue    yellowish green

blue    green

greenish blue    blue green    bluish green

# FIG.5A

FIG.5B

# FIG.5C